Europäisches Patentamt

European Patent Office

Office européen des brevets

(11) Numéro de publication: **0 246 971**
**A2**

## DEMANDE DE BREVET EUROPEEN

(21) Numéro de dépôt: **87401131.5**

(22) Date de dépôt: **20.05.87**

(51) Int. Cl.⁴: **G 06 F 3/033**
**G 06 K 11/06**

(30) Priorité: **21.05.86 FR 8607196**

(43) Date de publication de la demande:
**25.11.87 Bulletin 87/48**

(84) Etats contractants désignés:
**AT BE CH DE ES GB GR IT LI LU NL SE**

(71) Demandeur: **Bourgain, Pierre Edmond Gabriel**
**15, rue de Marnes**
**Ville d'Avray Hauts de Seine (FR)**

**Morel épouse Bourgain, Dominique Blanche**
**15, rue de Marnes**
**Ville d'Avray Hauts de Seine (FR)**

(72) Inventeur: **Bourgain, Pierre Edmond Gabriel**
**15, rue de Marnes**
**Ville d'Avray Hauts de Seine (FR)**

**Morel épouse Bourgain, Dominique Blanche**
**15, rue de Marnes**
**Ville d'Avray Hauts de Seine (FR)**

(74) Mandataire: **Cabinet Pierre HERRBURGER**
**115, Boulevard Haussmann**
**F-75008 Paris (FR)**

(54) Dispositif d'entrée de données dans un système informatique.

(57) a) Dispositif manuel d'entrée de données dans un système informatique.
b) Dispositif caractérisé en ce qu'il se compose :
- d'un boîtier mobile (1) susceptible d'être relié au système informatique, portant sur sa face supérieure (2) un clavier harmonique (3),
- sur sa face inférieure une boule de commande (4) du curseur permettant de déplacer le curseur sur l'écran par le mouvement de la boule,
- un organe de commande (5) du mode de fonctionnement du dispositif pour le faire passer du fonctionnement en mode curseur au fonctionnement en mode clavier ou inversement.
c) L'invention concerne la saisie de données notamment en informatique.

Fig. 1.

## Description

"Dispositif d'entrée de données dans un système informatique"

La présente invention concerne un dispositif d'entrée de données dans un système informatique.

Il existe différents moyens pour introduire des données dans un système informatique. Le moyen le plus habituel est le clavier.

Suivant l'usage qui est fait du système, les claviers sont plus ou moins compliqués et comportent en plus des touches alphanumériques d'un clavier de machine à écrire habituel, des touches de fonction qui sont particularisées suivant le travail à effectuer avec le clavier.

Ces touches peuvent être relativement nombreuses. Pour réduire le nombre de touches, certains claviers donnent plusieurs fonctions à chaque touche du clavier alphanumérique habituel. Pour passer de la fonction alphanumérique à une autre fonction, il faut commander le changement de fonction par une touche complémentaire.

De manière générale, la tendance actuelle des claviers est soit d'être spécialisés dans la mesure où cela est possible, soit d'être aussi universels que possible en devenant de plus en plus compliqués.

En conséquence, l'utilisation d'un clavier pour l'entrée de données notamment lorsque ce clavier est utilisé à la manière d'une machine à écrire habituelle, par exemple pour le traitement de textes, nécessite un apprentissage relativement long, précisément à cause des multiples fonctions. De plus, la multiplication des touches en complément des touches du clavier habituel d'une machine à écrire, dérange l'utilisateur car il doit passer de la partie correspondante au clavier habituel à la partie comportant les autres touches, ce qui lui fait changer d'habitude, l'oblige à regarder le clavier, à quitter l'écran des yeux et, en définitive, cela ralentit considérablement sa vitesse de frappe.

Lorsqu'un système est utilisé pour le traitement de textes, par exemple pour effectuer des corrections ou pour introduire des mots ou des groupes de mots nouveaux dans des phrases, en supprimer, etc..., l'utilisateur doit mettre le curseur à l'endroit de la phrase où il veut effectuer une modification. Sur les claviers habituels, le curseur se déplace dans les quatre directions d'un repère orthonormé, par la commande de quatre touches de direction.

Ainsi, pour effectuer une modification, l'utilisateur doit mettre le curseur à l'endroit de la modification en appuyant sur la ou les touches de déplacement correspondantes ; puis, une fois le curseur ainsi placé, il doit soit effacer les parties à supprimer, frapper les mots ou groupes de mots nouveaux pour les insérer, etc.... Là aussi, il y a un changement de la position des mains en passant du clavier alphanumérique aux touches de commande de déplacement du curseur puis retour sur le clavier alphanumérique. Ces changements de place des mains relantissent considérablement la dactylographie en traitement de texte.

Il existe également un dispositif de déplacement de curseur, usuellement appelé "souris" et qui remplace les quatre touches de commande de déplacement de curseur par un boîtier muni d'une boule que l'on fait rouler de manière à déplacer le curseur à vue.

Ce dispositif de commande de déplacement du curseur est très pratique car il permet de déplacer très rapidement et très efficacement le curseur. Ce dispositif peut s'utiliser pour les différentes applications en traitement de textes ou pour les applications graphiques (tracé de figures et de tableaux).

Toutefois, lorsque ce dispositif est utilisé pour le déplacement du curseur en traitement de texte, comme précédemment, l'utilisateur doit mettre sa main (droite ou gauche) sur le dispositif pour déplacer celui-ci en fonction du déplacement à obtenir pour le curseur. une fois le curseur mis en place, l'utilisateur vient au clavier alphanumérique.

Dans le cas d'une utilisation de ce dispositif pour tracer des dessins, l'utilisateur fait apparaître sur l'écran les icônes parmi lesquelles il choisit celle correspondant à la partie de dessin à tracer (traits, rectangles, carrés, triangles, cercles, lignes brisées, etc...). Il fait son choix en mettant le curseur sur l'icône choisie. Ce déplacement se fait en déplaçant la boule du dispositif.

Une fois l'icône choisie, l'utilisateur revient sur le dessin (toujours sur l'écran) et fait apparaître l'image de l' icône sur le dessin, avec les dimensions voulues.

Bien que ce système soit très pratique, il présente néanmoins l'inconvénient de nécessiter le déplacement du curseur sur l'icône puis le retour du curseur de l'icône vers l'emplacement où doit être tracée l'image correspondant à l'icône.

La présente invention a pour but de remédier aux inconvénients des moyens connus et se propose de créer un dispositif d'entrée de données dans un système informatique permettant d'introduire des données alphanumériques ou des données graphiques dans un système à l'aide d'un moyen particulièrement simple, ne nécessitant pas le contrôle visuel de la position des mains et permettant à l'utilisateur de ne regarder que l'écran, pour arriver à une saisie extrêmement rapide des données alphanumériques et/ou graphiques.

A cet effet, l'invention concerne un dispositif manuel d'entrée de données dans un système informatique, caractérisé en ce qu'il se compose d'un
- d'un boîtier mobile susceptible d'être relié au système informatique, portant sur sa face supérieure un clavier harmonique,
- sur sa face inférieure une boule de commande du curseur permettant de déplacer le curseur sur l'écran par le mouvement de la boule,
- un organe de commande de mode de fonctionnement du dispositif pour le faire passer du fonctionnement en mode curseur au fonctionnement en mode clavier ou inversement.

Le dispositif manuel, selon l'invention, permet d'introduire des données de façon particulièrement efficace, simple et rapide car, sans quitter le dispositif de la main et en conservant à la main et aux doigts leur position, l'utilisateur peut se servir de ce dispositif pour introduire des données pour le clavier (données alphanumériques ou graphiques) et pratiquement simultanément passer en mode curseur et déplacer le curseur pour effectuer immédiatement une correction sur les données qu'il vient d'introduire.

L'utilisateur n'a pas à déplacer sa main pour actionner les touches du curseur ou la boule commandant le déplacement du curseur et revenir au clavier alphanumérique comme dans les systèmes connus.

De plus, lors de ses changements de mode de fonctionnement, l'utilisateur n'a pas à vérifier la position de ses doigts puisque cette position est ergonométrique et que les doigts restent toujours en place.

Les avantages qui existent dans le cas d'introduction de données alphanumériques existent également dans le cas de l'exécution de dessins. En effet, les icônes peuvent être appelées soit, comme cela est le cas actuellement sur une liste d'icônes, par le déplacement du curseur mais ces icônes peuvent également être appelées de manière particulièrement avantageuse par leur code correspondant à la combinaison de touches du clavier harmonique.

Dans ces conditions, le curseur reste sur le dessin à un certain emplacement. En actionnant la touche de mode, l'utilisateur peut choisir à l'aide du clavier l'icône qu'il souhaite puis actionner de nouveau la touche de mode et faire apparaître l'image de l'icône à l'emplacement du curseur, emplacement qui n'a pas changé. Cela représente un gain de temps considérable étant donné qu'en exécution des dessins sur écran, le dessinateur est en permanence obligé de passer du dessin aux icônes et revenir.

L'organe de commande de mode est de préférence une touche, notamment une touche associée au pouce. Toutefois, cette touche pourrait également être une touche associée à la paume de la main, ce qui soit limiterait à deux le nombre de touches destinées au pouce, soit offrirait une possibilité de touche supplémentaire pour être actionnée par le pouce.

De façon particulièrement avantageuse, la touche de commande de mode associée au pouce, est distincte des touches du clavier harmonique et, en particulier, cette touche se trouve dans l'alignement ou dans le groupe des touches actionnées par le pouce et dans une position séparée ou éloignée des touches correspondant aux autres touches du clavier.

Suivant une caractéristique avantageuse, le dispositif comporte un moyen de visualisation de l'état du dispositif par exemple un petit dispositif d'affichage par diodes ou par cristaux liquides.

Bien que, de manière habituelle, l'utilisateur n'ait pas à regarder sa main ou le dispositif, il peut lui être nécessaire, en cas de doute, de vérifier l'état dans lequel se trouve le dispositif, par exemple après une interruption.

Il est à remarquer que le dispositif, selon l'invention, qui peut être commandé sans que l'utilisateur n'ait à le regarder, permet à celui-ci de vérifier l'introduction des données sur l'écran. Il dispose également d'une main libre.

Bien que, dans la description, le dispositif représenté corresponde à un dispositif destiné à des droitiers, l'invention permet de réaliser dans les mêmes conditions un dispositif destiné à des gauchers.

Enfin, de manière avantageuse, le dispositif comporte un moyen d'enregistrement d'informations, par exemple sur disquette, qui permet d'utiliser le dispositif comme moyen de "sténographie" pour la prise de notes au cours de conférences ou autres, et cela lorsque le dispositif n'est pas raccordé à un système informatique.

Ce dispositif peut également se brancher sur des écrans de contrôle disponibles par exemple un écran télétel.

La présente invention sera décrite de façon plus détaillée à l'aide des dessins annexés dans lesquels :

- La figure 1 est une vue de dessus d'un premier mode de réalisation d'un dispositif d'entrée de données, selon l'invention,
- La figure 2 est une vue de face du dispositif de la figure 1,
- La figure 3 est une vue de dessus d'un second mode de réalisation d'un dispositif d'entrée de données, selon l'invention,
- La figure 4 est une vue arrière du dispositif de la figure 3,
- La figure 5 est une vue avant du dispositif de la figure 3.

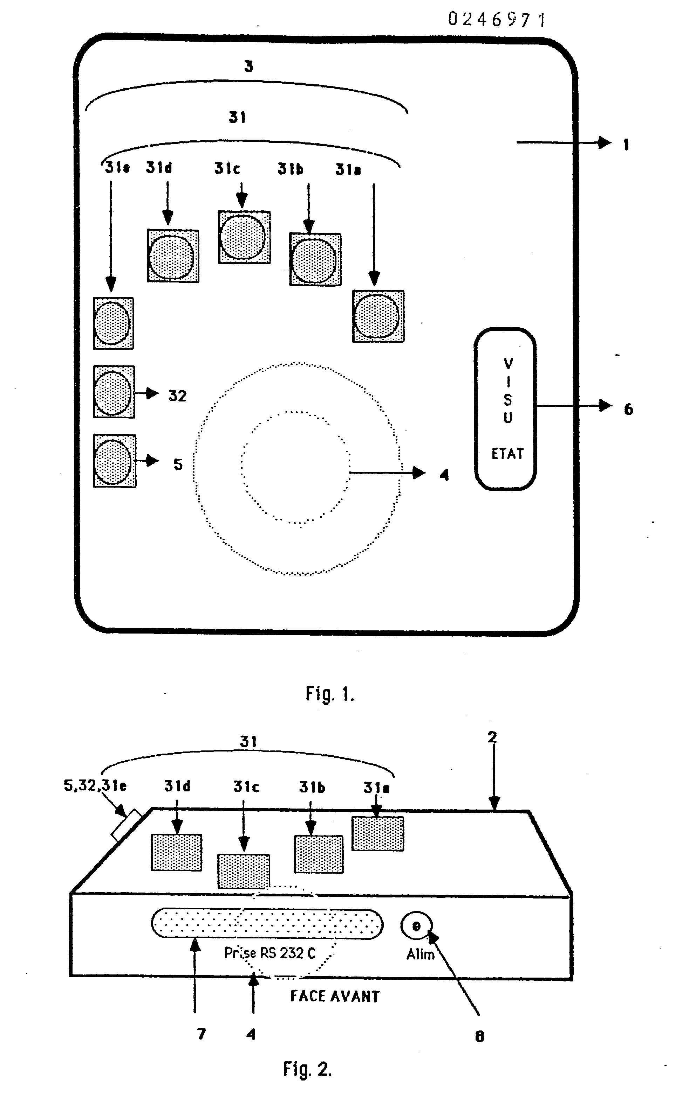

Selon les figures 1 et 2, le dispositif d'entrée de données dans un système informatique se compose d'un boîtier 1 portant, sur sa surface supérieure 2, un clavier harmonique 3 et sur sa face inférieure une boule 4.

Le clavier harmonique 3, prévu sur la face supérieure, est un clavier permettant l'introduction de signes alphanumériques, graphiques et d'ordres par l'actionnement d'une touche ou d'une combinaison de touches représentant ces signes. La boule 4 de la face inférieure constitue l'organe de commande du curseur qui permet de déplacer le curseur sur l'écran de contrôle en fonction de la rotation de la boule. Cette rotation de la boule s'obtient par déplacement du boîtier 1 sur la surface sur laquelle il repose. La rotation de cette boule transmet de manière connue son mouvement à deux galets orthogonaux et dont la rotation dans un sens ou dans l'autre est l'équivalent de l'actionnement de l'une ou de deux touches de déplacement du curseur d'un clavier habituel.

Le dispositif comporte un organe de commande de mode 5 qui permet de commander le fonctionnement du dispositif soit en mode curseur, soit en mode clavier.

Enfin, la face supérieure du boîtier 1 comporte un moyen d'affichage 6 permettant de visualiser l'état de fonctionnement du dispositif soit le mode curseur, soit le mode clavier, soit encore le mode spécifique du clavier, par exemple les majuscules, etc...

De façon plus détaillée, le clavier 3 se compose de touches réparties en touches alphanumériques ou graphiques 31 (31A, 31B, 31C, 31D, 31E) destinées à être actionnées par les cinq doigts de la main, la touche 31E étant celle actionnée par le pouce.

Le clavier comporte également une touche de commande 32. Selon le mode de réalisation représenté, l'organe de commande de mode 5 est une touche destinée à être actionnée par le pouce. Cette touche 5 est regroupée avec les touches 31E, 32 et 5 de manière à se trouver dans la zone d'action du pouce, la main restant immobile.

Les touches 31E, 32, 5 sont alignées ou placées suivant un arc de cercle centré sur le point de pivotement du pouce.

De manière générale, les touches 31, 32 et 5 sont disposées de façon ergonométrique pour que la position de la main n'ait pas à changer pour actionner les touches.

De façon habituelle, les touches 31 et 32 sont les touches d'un clavier harmonique. Cela signifie que ces touches, prises soit isolément, soit en combinaison deux à deux ou plus, représentent des lettres ou des symboles alphanumériques ou graphiques.

Le dispositif d'affichage 6 qui visualise l'état du dispositif est important pour qu'en cas de doute, l'utilisateur puisse vérifier l'état dans lequel se trouve le dispositif.

Enfin, comme représenté à la figure 2, le dispositif comporte sur sa face avant une prise 7 par exemple une prise de type RS 332C pour le raccordement du dispositif au système informatique ainsi qu'un branchement 8 pour l'alimentation du dispositif lorsque celui-ci est utilisé de manière autonome.

L'utilisation du dispositif sera décrite ci-après :

On supposera pour cette description que le dispositif est utilisé comme clavier alphanumérique.

Pour introduire des données alphanumériques (texte, chiffres, etc...), l'utilisateur actionne la touche de commande de mode 5 pour mettre le dispositif en mode clavier puis à l'aide des touches 31, il introduit les mots, symboles, etc...

En actionnant la touche 32, il peut modifier l'introduction, par exemple introduire des majuscules ou autres signes particuliers.

Lorsque l'utilisateur veut se servir de la fonction de curseur, par exemple à la relecture du texte, pour positionner le texte ou introduire des modifications, sans changer la main de place, il actionne la touche de commande 5 pour passer en mode curseur. Automatiquement, le dispositif passe en mode curseur. Il peut alors déplacer le boîtier 1 de manière à entraîner la boule 4 et commander le déplacement du curseur. Toute cette opération, de même que l'introduction de signes alphanumériques ou autres à l'aide des touches 31, se fait sans contrôle visuel c'est-à-dire sans que l'utilisateur n'ait à regarder la position de ses doigts sur le dispositif.

Il suit uniquement l'apparition des différents symboles et l'exécution des opérations sur son écran de contrôle.

Il en est de même du curseur dont il suit le déplacement sur l'écran et commande le déplacement du boîtier 1 pour positionner le curseur à l'endroit approprié.

S'il s'agit par exemple d'une insertion de mots ou de symboles, lorsque le curseur est positionné à l'endroit approprié, il actionne la touche 5 qui fait passer le boîtier 1 automatiquement en mode clavier. A l'aide des touches 31, il introduit à l'endroit approprié les corrections ou les ajouts, suppressions, etc....

A la fin de cette introduction, il appuie sur la touche 5 et passe en mode curseur pour effectuer les corrections suivantes.

Ainsi, l'utilisateur du dispositif 1 correspond sur un système informatique à l'utilisation d'un crayon traditionnel.

Le dispositif, selon l'invention, est assimilable à un "crayon informatique". En effet, comme le lecteur peut suivre un texte avec la pointe de son crayon puis arriver à l'endroit approprié et insérer à l'aide de ce même crayon les modifications souhaitées, l'utilisation du dispositif, selon l'invention, peut, à l'aide du même dispositif et sans modifier la position de sa main ni la changer de place sur le dispositif, écrire un texte, puis le relire en le suivant à l'aide du curseur et arrêter le curseur à l'endroit approprié pour toujours, à l'aide du même dispositif, introduire les ajouts, suppressions ou corrections à l'endroit du curseur.

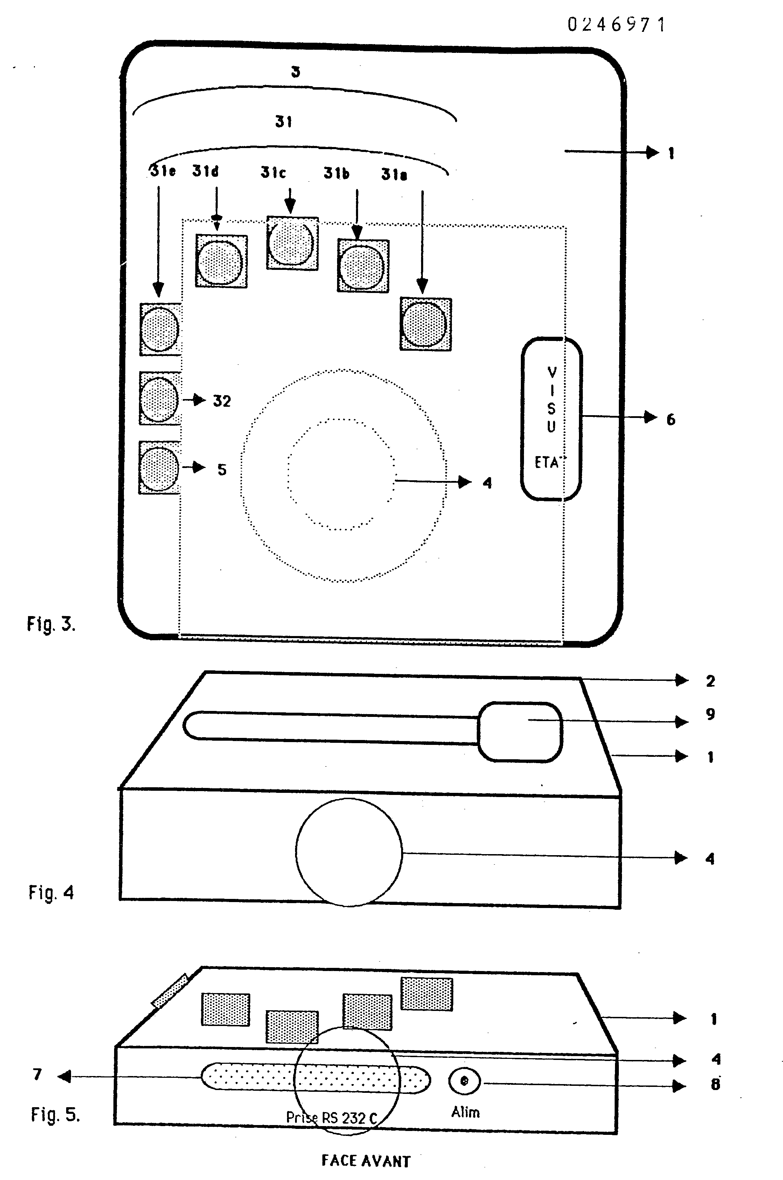

Les figures 3, 5 montrent un second mode de réalisation du dispositif selon l'invention. Ce mode de réalisation se distingue du mode de réalisation des figures 1 et 2 par l'adjonction d'un moyen d'enregistrement sur disquette.

La figure 3 montre l'emplacement 8 de la disquette.

La figure 4 montre la fente 9 d'introduction de la disquette, dans la face arrière. Pour le reste, le dispositif est analogue à celui décrit ci-dessus.

**Revendications**

1o) Dispositif manuel d'entrée de données dans un système informatique, dispositif caractérisé en ce qu'il se compose :
- d'un boîtier mobile (1) susceptible d'être relié au système informatique, portant sur sa face supérieure (2) un clavier harmonique (3),
- sur sa face inférieure une boule de commande (4) du curseur permettant de déplacer le curseur sur l'écran par le mouvement de la boule,
- un organe de commande (5) du mode de fonctionnement du dispositif pour le faire passer du fonctionnement en mode curseur au fonctionnement en mode clavier ou inversement.

2o) Dispositif d'entrée de données selon la revendication 1, caractérisé en ce que l'organe de commande (5) de mode est une touche.

3o) Dispositif d'entrée de données selon la revendication 2, caractérisé en ce que la touche de commande (5) de mode est une touche associée au pouce.

4o) Dispositif d'entrée de données, selon la revendication 3, caractérisé en ce que la touche de commande (5) de mode associée au pouce est une touche distincte des touches du clavier harmonique associées au pouce.

5o) Dispositif d'entrée de données selon la revendication 4, caractérisé en ce que la touche de commande (5) de mode associée au pouce est la dernière touche de pouce de la série des touches (31e, 32, 5) actionnées par le pouce.

6o) Dispositif selon la revendication 2, caractérisé en ce que la touche de commande (5) de mode est une touche associée à la paume de la main.

7o) Dispositif d'entrée de données selon la revendication 1, caractérisé en ce qu'il comporte un moyen de visualisation (6) de l'état du dispositif.

8o) Dispositif d'entrée de données selon la revendication 1, caractérisé en ce qu'il comporte un moyen d'enregistrement (8) d'informations permettant l'utilisation du dispositif de manière autonome ou en liaison avec un moniteur quelconque.

0246971

Fig. 1.

Fig. 2.

Prise RS 232 C

FACE AVANT

Alim

0246971

Fig. 3.

Fig. 4

Fig. 5.

FACE AVANT